(19) Europäisches Patentamt / European Patent Office / Office européen des brevets

(11) **EP 4 120 711 A1**

(12) **EUROPEAN PATENT APPLICATION**
published in accordance with Art. 153(4) EPC

(43) Date of publication:
**18.01.2023 Bulletin 2023/03**

(21) Application number: **20924708.9**

(22) Date of filing: **09.03.2020**

(51) International Patent Classification (IPC):
**H04W 8/22** $^{(2009.01)}$

(52) Cooperative Patent Classification (CPC):
**H04W 8/22**

(86) International application number:
**PCT/JP2020/010106**

(87) International publication number:
**WO 2021/181485 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **UCHINO Tooru**
  **Tokyo 100-6150 (JP)**
• **TAKAHASHI Hideaki**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL**

(57) A terminal includes: a predetermined buffer that is set as a buffer for use in the terminal; and a transmitting unit that transmits a first information element related to size of the predetermined buffer to a base station.

## FIG.8

## Description

Technical Field

The present invention relates to terminals.

Background Art

The 3rd Generation Partnership Project (3GPP) has specified Long Term Evolution (LTE), and LTE-Advanced (hereinafter, called LTE including LTE-Advanced) for the purpose of further speeding up LTE. The 3GPP is also advancing the specification of 5th generation mobile communication system (hereinafter, also called 5G, New Radio (NR) or Next Generation (NG)). Furthermore, the 3GPP is proceeding with specification of mobile communication systems of 5G and later (sometimes called 6G and beyond 5G, but not limited to these names).

In NR, user equipment (UE) supports uplink data rate, uplink radio link control round trip time (RLC RTT), downlink data rate, and RLC buffer size calculated based on downlink RLC RTT (for example, Non-Patent Literature 1).

Citation List

Non Patent Literature

Non Patent Literature 1: 3GPP TS38.306 v15.8.0

Summary of Invention

At present, since the UE needs to support the RLC buffer size described above, the cost of the UE cannot be reduced. On the other hand, if the UE arbitrarily reduces the RLC buffer size, a buffer drop will occur due to excessive scheduling on the network side.

A first aspect is a terminal that includes: a predetermined buffer that is set as a buffer for use in the terminal; and a transmitting unit that transmits a first information element related to the size of the predetermined buffer to a base station.

Brief Description of Drawings

Fig. 1 is an overall schematic configuration diagram of a radio communication system 10.
Fig. 2 is a diagram illustrating a UE 200 according to an embodiment.
Fig. 3 is a diagram illustrating a base station 300 according to the embodiment.
Fig. 4 is a diagram for explaining buffer sizes according to the embodiment.
Fig. 5 is a diagram for explaining an example of buffer information according to the embodiment.
Fig. 6 is a diagram for explaining an example of buffer information according to the embodiment.
Fig. 7 is a diagram for explaining an example of buffer information according to the embodiment.
Fig. 8 is a diagram for explaining an operation example 1 according to the embodiment.
Fig. 9 is a diagram for explaining an operation example 2 according to the embodiment.
Fig. 10 is a diagram for explaining an operation example 3 according to the embodiment.
Fig. 11 is a diagram for explaining an operation example 4 according to the embodiment.
Fig. 12 is a diagram illustrating an example of a hardware configuration of the UE 200 or the base station 300 according to the embodiment.

Description of Embodiments

Embodiments will be described below with reference to the drawings. The same functions and configurations are given the same or similar reference numerals, and the description thereof will be omitted as appropriate.

Embodiment

(1) Overall schematic configuration of radio communication system

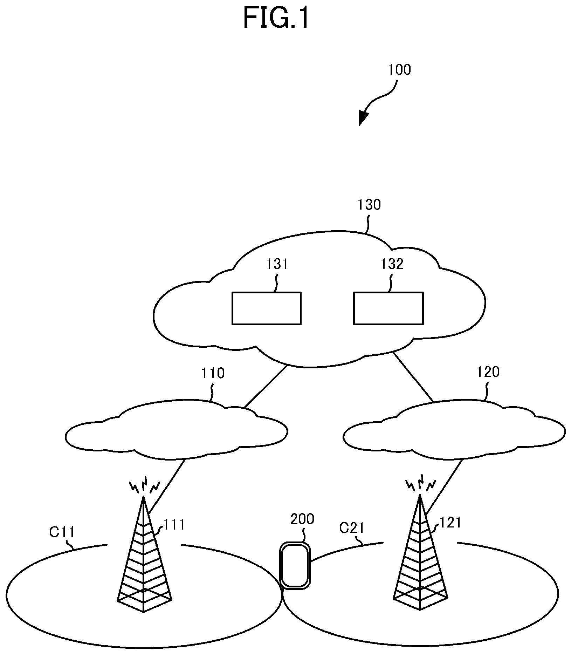

Fig. 1 is an overall schematic configuration diagram of a radio communication system 100 according to an embodiment. The radio communication system 100 is a radio communication system complying with Long Term Evolution (LTE) and 5G New Radio (NR). Note that LTE may be called 4G and NR may be called 5G. LTE and NR each may be interpreted as a radio access technology (RAT). In the embodiment, LTE may be called a first radio access technology and NR may be called a second radio access technology. NR may be considered to include radio access technologies of 5G or later (for example, beyond 5G, 6G, etc.).

The radio communication system 100 includes an Evolved Universal Terrestrial Radio Access Network 110 (hereinafter, E-UTRAN 110), a Next Generation-Radio Access Network 120 (hereinafter, NG RAN 120), and a core network 130. The radio communication system 100 includes a terminal 200.

The E-UTRAN 110 includes an eNB 111 that is an LTE-compliant base station. The eNB 111 has one or more cells C11. The E-UTRAN 110 may include two or more eNBs 111.

The NG RAN 120 includes a gNB 121 that is a 5G (NR)-compliant base station. The gNB 121 has one or more cells C21. The NG RAN 120 may include two or more gNBs 121.

The term "cell" may be used to mean a function of the eNB 111 or the gNB 121, that is, a function of communicating with the terminal 200. The term "cell" may be used to mean the coverage area of the eNB 111 or gNB 121. Each cell may be distinguished by the frequency used in each cell. The E-UTRAN 110 and the NG RAN 120 (which may be the eNB 111 or the gNB 121) may be simply called radio access networks or access networks.

The eNB 111, gNB 121, and terminal 200 may be compatible with any of carrier aggregation (CA) using a plurality of component carriers (CC), dual connectivity (DC) to simultaneously transmit component carriers between a plurality of eNBs 111 and the terminal 200, dual connectivity (DC) to simultaneously transmit component carriers between a plurality of gNBs 121 and the terminal 200, and dual connectivity (DC) to simultaneously transmit component carriers among the eNB 111, gNB 121, and terminal 200.

The eNB 111, gNB 121, and terminal 200 execute radio communication via a radio bearer. The radio bearer may include a signaling radio bearer (SRB) and a data radio bearer (DRB).

Although there is no particular limitation on the terminal 200, the terminal 200 may be called "mobile station (MS)" or "user equipment (UE)". Hereinafter, the terminal 200 will be referred to as UE 200.

The core network 130 includes an evolved packet core (EPC) in compliance with LTE and a 5G core in compliance with 5G (NR). The EPC includes a network node 131 in compliance with LTE (for example, mobility management entity (MME)). The 5G core includes a network node 132 in compliance with 5G (NR) (for example, access and mobility management function (AMF)). The MME and AMF are network nodes that execute processing related to the control plane. The nodes may be referred to as functions.

The interface between the eNB 111 and the MME and the interface between the gNB 121 and the MME may be referred to as S1 interfaces. The interface between the gNB 121 and the AMF may be referred to as an NG interface or N2 interface. The interface between the eNB 111 and the eNB 111 and the interface between the eNB 111 and the gNB 121 may be referred to as X2 interface. The interface between the gNB 121 and the gNB 121 may be referred to as Xn interface. The interface between the MME and the AMF may be referred to as N26 interface.

(2) Functional block configuration of the terminal

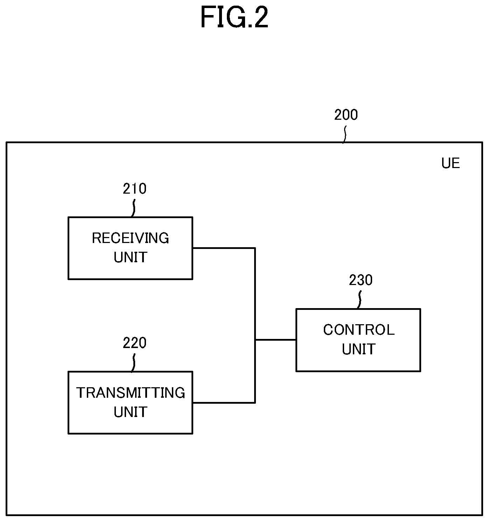

Fig. 2 is a diagram illustrating a functional block configuration of the UE 200 according to the embodiment. As illustrated in Fig. 2, the UE 200 includes a receiving unit 210, a transmitting unit 220, and a control unit 230.

The receiving unit 210 receives various kinds of information from a network (for example, the eNB 111 or the gNB 121). For example, the receiving unit 210 receives a radio resource connection (RRC) message. The RRC message is a message used for setting, modifying and releasing the RRC.

The transmitting unit 220 transmits various kinds of information to a network (for example, the eNB 111 or the gNB 121). For example, the transmitting unit 220 transmits an RRC message.

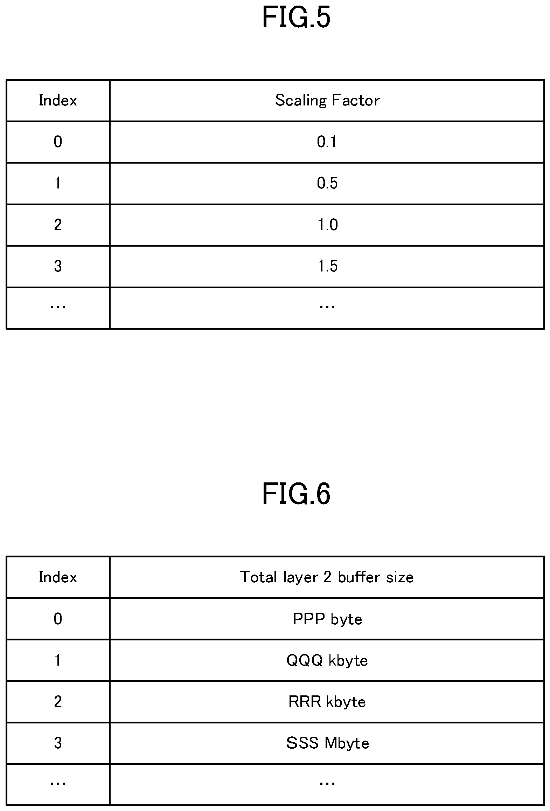

The RRC message includes a first information element related to the size of a predetermined buffer used by the UE 200. Details of the first information element will be described later (Figs. 5 to 7). For example, the predetermined buffer is set as a buffer used in a second layer. The second layer (hereinafter, layer 2) includes at least a radio link control (RLC) layer. The layer 2 may include a packet data convergence protocol (PDCP) layer. The layer 2 may be a layer under an RRC layer and may be a layer above a physical layer. The RRC message may include a second information element indicating whether the device has a function of notifying the first information element.

The control unit 230 controls the operations of the UE 200. For example, the control unit 230 has a predetermined buffer (hereinafter, layer 2 buffer) set as a buffer used by the UE 200. The control unit 230 controls the transmission of the above-mentioned first information element.

(3) Functional block configuration of the base station

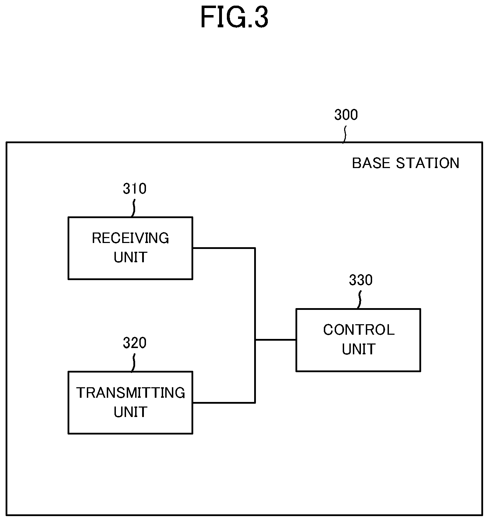

Fig. 3 is a diagram illustrating a functional block configuration of the base station 300 according to the embodiment. In the embodiment, the eNB 111 and gNB 121 described above may have the same configuration. Therefore, the base station 300 will be described without distinguishing between them. As illustrated in Fig. 3, the base station 300 includes a receiving unit 310, a transmitting unit 320, and a control unit 330.

The receiving unit 310 receives various kinds of information from the UE 200. For example, the receiving unit 310 receives an RRC message. The RRC message may include the above-mentioned first information element. The RC message may include the above-mentioned second information element.

The transmitting unit 320 transmits various kinds of information to the UE 200. For example, the transmitting unit 320 transmits an RRC message.

The control unit 330 controls the operations of the base station 300. For example, the control unit 330 executes scheduling based on buffer information. The scheduling is executed at a data rate at which no buffer drop will occur due to the buffer size notified from the UE 200.

(4) Buffer size

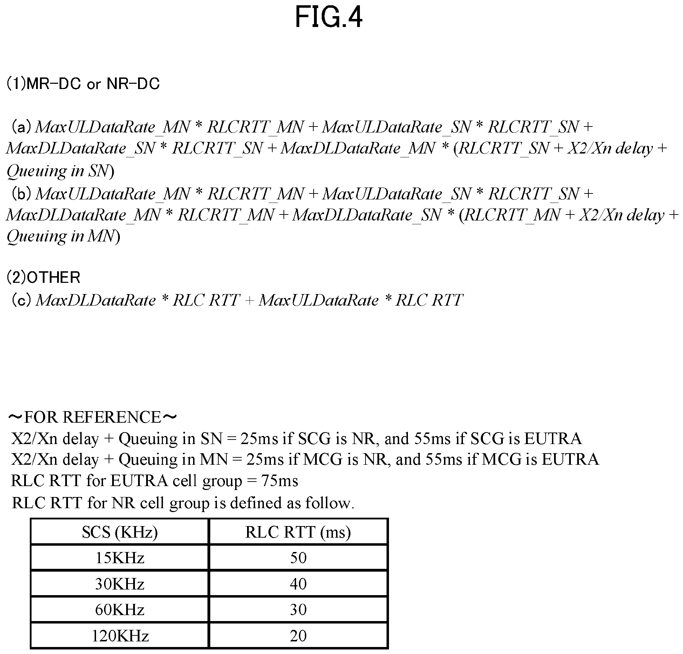

Fig. 4 is a diagram for explaining buffer sizes according to the embodiment. The method for calculating the default value of layer 2 buffer size will be described.

When multi-RAT dual connectivity (MR-DC) or NR-DC is executed, the layer 2 buffer size needs to satisfy the maximum values of the formulas (a) and (b) illustrated in Fig. 4. On the other hand, when MR-DC and NR-DC are not executed, the layer 2 buffer size needs to satisfy the formula (c) illustrated in Fig. 4. The formula (a) is a formula on the assumption that transfer from the secondary node (hereinafter, SN) to the master node (hereinafter, MN) is executed, and the formula (b) is a formula on the assumption that transfer from the MN to the SN is executed.

MaxULDataRate_MN is the maximum data rate of UL to MN. RLCRTT_MN is the round trip time (RTT) between the RLC of the MN and the UE 200. MaxULDataRate_SN is the maximum data rate of the UL to the SN. RLCRTT_SN is the RTT between the RLC of the SN and the UE 200. MaxDLDataRate_SN is the maximum data rate of the DL from the SN. MaxDLDataRate_MN is the maximum data rate of the DL from the MN. X2/Xn delay is the delay time between the MN and the SN. Queueing in SN is the delay time of the SN. Queueing in MN is the delay time of the MN.

As illustrated in Fig. 4, "X2/XN delay + Queueing in SN" may be 25 ms when a secondary cell group (SCG) is NR and may be 55 msec when the SCG is EUTRA. "X2/XN delay + Queueing in MN" may be 25 ms when a master cell group (MCG) is NR and may be 55 msec when the MCG is EUTRA. The RLC RTT of the EUTRA cell group may be 75 msec. The RLC RTT of the NR cell group may be determined according to sub-carrier spacing (SCS).

As described above, the method described in §4.1.4 "Total layer 2 buffer size" of 3GPP TS36.306 v15.8.0 may be used as the method for calculating the default value of layer 2 buffer size.

The maximum data rate of the UL or DL may be specified based on the following equation:
[Math. 1]

The values of the above-mentioned formula are as described below.

j is the number of component carriers (hereinafter, CC) that are integrated in the frequency band or the frequency band combination.

$$R_{max} \text{ is } 948/1024.$$

$v^{(i)}$_Layers is the maximum number of support layers given by upper layer parameters. The upper layer parameters may include maxNumberMIMO-LayersPDSCH for the DL, maxNumberMIMO-LayersCB-PUSCH and maxNumberMIMO-LayersNonCB-PUSCH for the UL.

$Q^{(j)}$_m may be the modulation order given by the upper layer parameters. The upper parameter may include supportedModulationOrderDL for the DL and supportedModulationOrderUL for the UL.

$f^{(j)}$ is a coefficient given by the upper layer parameters. Possible values for the coefficient may be 1, 0.8, 0.75, and 0.4.
$\mu$ is a predetermined value. The predetermined value may be defined in TS38.211 v15.8.0.
$T^{\mu}$_S is the average value of OFDM symbol intervals within a sub-frame for $\mu$.
$N^{BW(j)}$, $\mu$_PPB is the maximum resource block (RB) allocated in $BW^{(j)}$ for $\mu$.
$OH^{(j)}$ is an overhead and can take a different value for each frequency. $OH^{(j)}$ may be 0.14 for frequency range 1 (FR1) of the DL, may be 0.18 for frequency range 2 (FR2) of the DL, may be 0.08 for FR1 of the UL, and may be 0.10 for FR2 of the UL.

As a method for calculating the maximum data rate, the method described in §4.1.2 "Supported max data rate" of TS38.306 v15.8.0 may be used.
In the embodiment, the layer 2 buffer size may be changed from the default value. For example, the layer 2 buffer size set in the UE 200 may not satisfy the above formula (a) or (b).

(5) First information element

Figs. 5 to 7 are diagrams for explaining the first information element according to the embodiment.
First, the first information element may include an information element for specifying a coefficient (hereinafter, scaling factor) multiplied by parameters used for specifying the layer 2 buffer size.
The parameters used to specify the layer 2 buffer size may include the parameters illustrated in Fig. 4 For example, the parameters include the maximum data rate of the UL (to MN/SN) (MaxULDataRate), the maximum data rate of the DL (to MN/SN) (MaxDLDataRate), RTT (for MN/SN) (RLCRTTT), the delay time between base stations (X2/Xn delay), the delay time in a base station (queueing in (SN/MN)), and the like. The parameters used to specify the layer 2 buffer size may include the parameters used to calculate the maximum data rate.
Under such a background, one scaling factor may be set for one layer 2 buffer. That is, the layer 2 buffer size calculated by the formula illustrated in Fig. 4 may be multiplied by one scaling factor. In other words, all the parameters used in the formula illustrated in Fig. 4 may be multiplied by one scaling factor.
Alternatively, two or more scaling factors may be set for one layer 2 buffer. That is, each one or more parameters used in the formula illustrated in Fig. 4 may be multiplied by an individual scaling factor. In such a case, the first information element includes an information element indicating the combinations of the parameters and the scaling factors. For example, individual scaling factors may be defined for UL-related parameters and DL-related parameters. Individual scaling factors may be defined for MN/MCG-related parameters and SN/SCG-related parameters. In the calculation of the maximum data rate, an individual scaling factor may be defined for each CC or an individual scaling factor may be defined for each cell. In the calculation of the maximum data rate, an individual scaling factor may be defined for one or more CCs or cells belonging to the same frequency band. In the calculation of the maximum data rate, an individual scaling factor may be defined for one or more CCs or cells belonging to the same frequency range (FR). A scaling factor multiplied by a coefficient ($f^{(j)}$) used in the calculation of the maximum data rate may be defined. In this way, the (combinations of) parameters for defining the individual scaling factors may be arbitrary.

Further, the scaling factors may be associated with indexes as illustrated in Fig. 5. Fig. 5 illustrates the scaling factors multiplied by the default value of the layer 2 buffer size calculated by the formula illustrated in Fig. 4. For example, when the index is 0, the scaling factor may be 0.1, and when the index is 1, the scaling factor may be 0.5. In such a case, the first information element may include not the scaling factor itself but the index associated with the scaling factor.

The indexes may be associated with the ranges of values that the scaling factors can take. For example, when the index is 0, the range of scaling factors may be 0.1 to 0.5, and when the index is 1, the range of scaling factors may be 0.5 to 1.0. In such a case, the first information element may include not the scaling factor itself but the index and an information element (for example, a bit string) for specifying the scaling factor from the range of scaling factors associated with the index.

The indexes may have different meanings depending on at least one of UE capability, setting information, and state. That is, even if the index value is the same, the scaling factor associated with the index may be different, or the range of scaling factors associated with the index may be different, depending on at least one of UE capability, setting information, and state.

When the first information element is not notified to the base station 300, the base station 300 may determine that a fixed value is to be used as the scaling factor. For example, the base station 300 may determine that the layer 2 buffer size set in the UE 200 is the default value of the layer 2 buffer size calculated by the formula illustrated in Fig. 4. In the example illustrated in Fig. 5, the base station 300 may determine that the scaling factor is 1.0.

Secondly, the first information element may include an information element for specifying the layer 2 buffer size. The first information element may include an information element that directly indicates the layer 2 buffer size set in the UE 200. For example, the first information element may be an information element such as XX bytes (kbytes or Mbytes). Alternatively, the first information element may include an information element that indirectly indicates the layer 2 buffer size set in the UE 200. For example, the first information element may include an information element that indicates the difference of the layer 2 buffer size calculated by the formula illustrated in Fig. 4 from the default value. The difference may have a positive value or a negative value.

Furthermore, the layer 2 buffer size (total layer 2 buffer size illustrated in Fig. 6) may be associated with indexes as illustrated in Fig. 6. Fig. 6 illustrates information elements that directly indicate the layer 2 buffer sizes. For example, when the index is 0, the layer 2 buffer size may be PPP bytes, and when the index is 1, the layer 2 buffer size may be QQQ kbytes. In such a case, the first information element may include not the layer 2 buffer size itself but the index associated with the layer 2 buffer size.

The indexes may be associated with the ranges of values that the layer 2 buffer size can take. For example, when the index is 0, the range of layer 2 buffer sizes may be PPP bytes to QQQ kbytes, and when the index is 1, the range of layer 2 buffer sizes may be QQQ kbytes to RRR kbytes. In such a case, the first information element may include not the layer 2 buffer size itself but the index and an information element (for example, a bit string) that specifies the layer 2 buffer size from the range of layer 2 buffer sizes associated with the index.

The indexes may have different meanings depending on at least one of UE capability, setting information, and state. That is, even if the index value is the same, the layer 2 buffer size associated with the index may be different, or the range of layer 2 buffer sizes associated with the index may be different, depending on at least one of UE capability, setting information, and state.

When the first information element is not notified to the base station 300, the base station 300 may determine that a fixed value is to be used as the layer 2 buffer size. For example, the base station 300 may determine that the layer 2 buffer size set in the UE 200 is the default value of the layer 2 buffer size calculated by the formula illustrated in Fig. 4. For example, when the first information element is the difference from the default value, the base station 300 may determine that the difference is 0.

Thirdly, the first information element may include an information element for specifying a combination of bands supportable by the layer 2 buffer size set in the UE 200 (hereinafter, band combination). The band combination may include the CA of LTE, the CA of NR, the DC between LTE and the NR (EN-DC), the DC between NR and LTE (NE-DC), the DC between NR (NR-DC), and the like. The layer 2 buffer size for supporting the band combination may be different for each band combination.

The first information element may include an information element that indicates a band combination supportable by the layer 2 buffer size set in the UE 200. The information element may be an index. The first information element may include an information element that indicates a band combination unsupportable by the layer 2 buffer size set in the E 200. The information element may be an index. The first information element may include, for each band combination, an information element indicating whether the band combination can be supported.

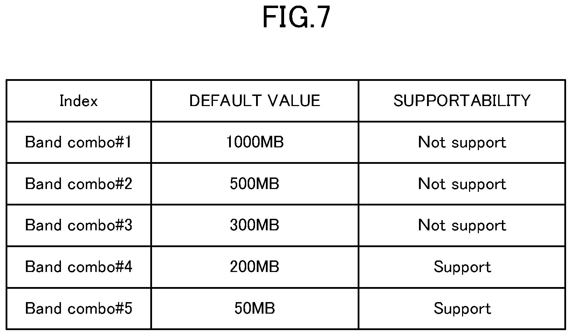

For example, as illustrated in Fig. 7, when band combos #1 to #5 are defined as band combinations, the first information element may include an information element that indicates whether each of the band combos #1 to #5 can be supported (supportable/unsupportable in Fig. 7). Fig. 7 illustrates a case where the layer 2 buffer size set in the UE 200 is 200 MB and the first information element includes an information element that indicates the band combos #1 to #3 are unsupportable and the band combos #4 and #5 are supportable.

In the case illustrated in Fig. 7, the first information element includes an information element indicating supportability for all the band combinations, but the embodiment is not limited to this.

For example, the first information element may include a band combination that requires the largest layer 2 buffer size, among the band combinations that can be supported by the layer 2 buffer size set in the UE 200. For example, in the case illustrated in Fig. 7, the first information element may include an information element indicating the band combo #4.

Alternatively, the first information element may include an information element that indicates whether the band combination specified by a network (for example, the base station 300) can be supported. For example, in the case illustrated in Fig. 7, when the band combo #2 is specified by the network, the first information element may include an information element that indicates the band combo #2 cannot be supported, and when the band combo #4 is specified by the network, the first information element may include an information element that indicates the band combo #4 can be supported. The network can indirectly limit the band combinations by limiting the frequencies and combinations of frequencies that the UE 200 can use (TS36.331 v15.8.0 and TS38.331 v15.8.0).

(6) Operation example 1

Hereinafter, an operation example 1 according to the embodiment will be described. Here, the simplest operation example will be described.

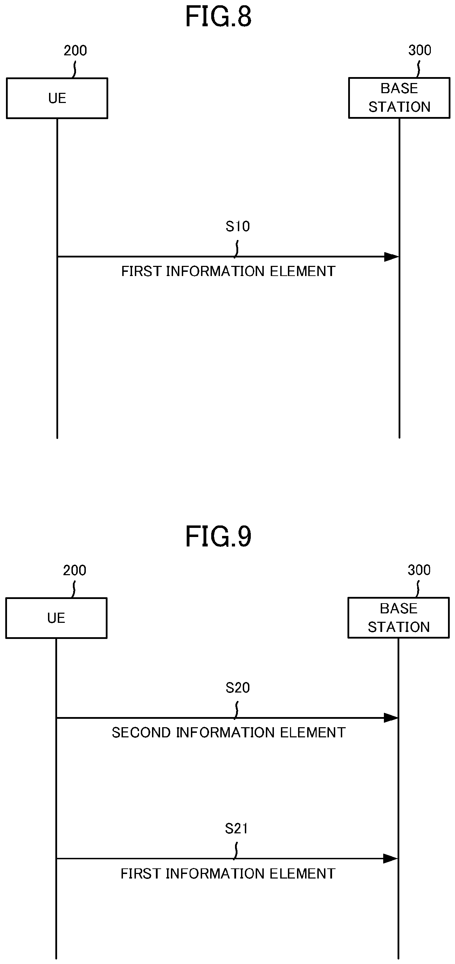

As illustrated in Fig. 8, in step S10, the UE 200 transmits the first information element related to the layer 2 buffer size to the base station 300. The first information element may include an information element for specifying the scaling factor multiplied by the parameter used for specifying the layer 2 buffer size, may include an information element for specifying the layer 2 buffer size, or may include an information element for specifying the band combination that can be supported by the layer 2 buffer size.

The first information element may be included in the RRC message. The RRC message including the first information element may be called buffer-related capability notification. The first information element may be called scaling factor.

(7) Operation example 2

Hereinafter, an operation example 2 according to the embodiment will be described. In the following, differences from the operation example 1 will be mainly described.

As illustrated in Fig. 9, in step S20, the UE 200 transmits to the base station 300 the second information element that indicates whether the UE 200 has the function of notifying the first information element.

In step S21, the UE 200 transmits the first information element related to the layer 2 buffer size to the base station 300.

(8) Operation example 3

Hereinafter, an operation example 3 according to the embodiment will be described. In the following, differences from the operation example 1 will be mainly described.

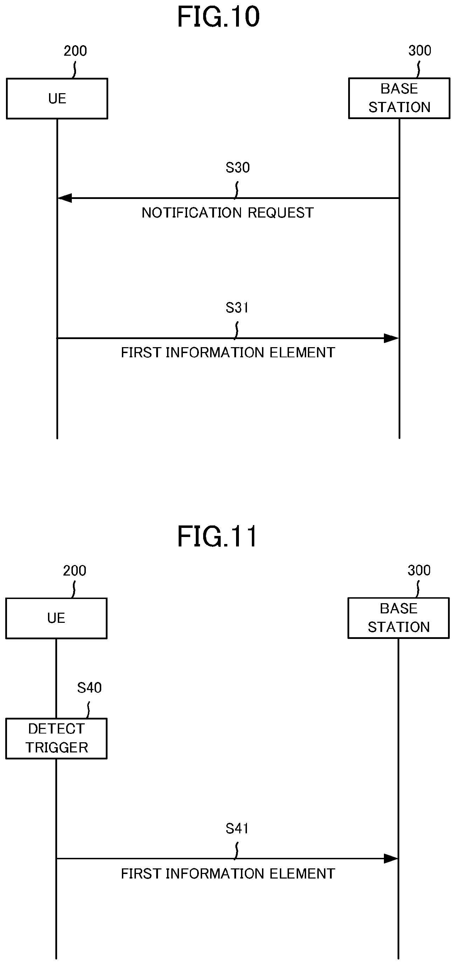

As illustrated in Fig. 10, in step S30, the base station 300 transmits a message requesting notification of the first information element (notification request in Fig. 10) to the UE 200.

In step S31, the UE 200 transmits the first information element related to the layer 2 buffer size to the base station 300 in response to the request from the base station 300.

Here, the operation example 3 may be combined with the operation example 2. That is, the base station 300 may specify the UE 200 having the function of notifying the first information element based on the second information element and transmit the notification request in step S30 to the specified UE 200.

Here, the base station 300 may transmit the notification request in step S30 to the UE 200 in which the layer 2 buffer size smaller than the predetermined lower limit value is set, that is, the UE 200 in which the layer 2 buffer is insufficient. The base station 300 may transmit the notification request in step S30 to the UE 200 in which the layer 2 buffer size greater than the predetermined upper limit value is set, that is, the UE 200 in which the layer 2 buffer is excessive. The base station 300 may transmit the notification request in step S30 to the UE 200 in which the layer 2 buffer size smaller than the predetermined lower limit value is set and the UE 200 in which the layer 2 buffer size greater than the predetermined upper limit value is set.

(9) Operation example 4

Hereinafter, an operation example 4 according to the embodiment will be described. In the following, differences from the operation example 1 will be mainly described.

As illustrated in Fig. 11, in step S40, the UE 200 detects a predetermined trigger occur in the UE 200.

In step S41, the UE 200 transmits the first information element related to the layer 2 buffer size to the base station 300 in response to the detection of the predetermined trigger.

Here, the predetermined trigger may include a trigger that the UE 200 sets an RRC connection with a specific RAT. The specific RAT may include at least a RAT of the NR (NG RAN 120). The specific RAT may include a RAT of the LTE (E-UTRAN 110) in addition to the RAT of the NR (NG RAN 120).

The predetermined trigger may include a trigger that the UE 200 has executed the CA. The predetermined trigger may include a trigger that the UE 200 has executed the DC. The DC constituting the predetermined trigger may include at least one of EN-DC, NE-DC, and NR-DC.

The predetermined trigger may include a trigger that the layer 2 buffer size set in the UE 200 is smaller than a predetermined lower limit value. The predetermined trigger may include a trigger that the layer 2 buffer size set in the UE 200 is larger than a predetermined upper limit value. The predetermined trigger may include both a trigger that the layer 2 buffer size set in the UE 200 is smaller than a predetermined lower limit value and a trigger that the layer 2 buffer size set in the UE 200 is larger than a predetermined upper limit value.

The predetermined trigger may include a trigger that the UE capability of the UE 200 has been changed. The UE capability includes parameters that affect the maximum data rate used to calculate the layer 2 buffer size.

(10) Operations and effects

In the embodiment, the UE 200 transmits the first information element related to the layer 2 buffer size to the base station 300. According to this configuration, the base station 300 can appropriately perform scheduling while allowing the UE 200 to set the layer 2 buffer size different from the default value of the layer 2 buffer size calculated by the formula illustrated in Fig. 4, that is, while allowing the UE 200 to flexibly set the layer 2 buffer size. In other words, even if a layer 2 buffer size smaller than the default layer 2 buffer size is set, it is possible to suppress the occurrence of buffer drop and the reduction in throughput. Even if a layer 2 buffer size greater than the default layer 2 buffer size is set, it is possible to effectively use the layer 2 buffer and improve throughput.

[Modification 1]

Hereinafter, a first modification of the embodiment will be described. In the following, differences from the embodiment will be mainly described.

Although not particularly mentioned in relation to the embodiment, the layer 2 buffer may be the total buffer used in the layer 2 (total layer 2 buffer). However, the embodiment is not limited to this.

In the modification 1, the layer 2 buffer may include a UL layer 2 buffer or a DL layer 2 buffer. The UE 200 may distinctively manage the UL layer 2 buffer and the DL layer 2 buffer, and may transmit the first information element related to the buffer size for at least one of the UL layer 2 buffer and the DL layer 2 buffer to the base station 300.

In the modification 1, the layer 2 buffer may include a hybrid automatic repeat request (HARQ) buffer, and the layer 2 buffer may include an RLC reordering buffer. The UE 200 may distinctively manage the HARQ buffer and the RLC reordering buffer, and may transmit the first information element related to the buffer size for at least one of the HARQ buffer and the RLC reordering buffer to the base station 300.

[Modification 2]

A second modification of the embodiment will be described below. In the following, differences from the embodiment will be mainly described.

In relation to the embodiment, the scaling factor multiplied by the parameter used for specifying the layer 2 buffer size has been described. On the other hand, in the modification 2, the first information element may include, in addition to the information element for specifying the above-mentioned scaling factor (hereinafter, reference scaling factor), an information element for specifying a weighting value multiplied by the reference scaling factor. The information element for specifying the weighting value may be an information element indicating the weighting value itself, or may be information indicating an index associated with the weighting value.

For example, the weighting value multiplied by the reference scaling factor may take a value selected from {0.1, 0.25, 0.5, 0.75, 1.0, 1.25, 1.5, 2.0, Reserved}. The possible values taken by the weighting value may not include 1.0. A value obtained by multiplying the reference scaling factor by the weighting value may be used as the scaling factor multiplied by the parameter used for specifying the layer 2 buffer size. For example, when the reference scaling factor is 1.5 and the weighting value is 0.5, the scaling factor multiplied by the parameter may be 0.75 (= 1.5 * 0.5). Reserved may be a value reserved for future extended functions. Alternatively, Reserved may mean that the parameter is not to be multiplied by the scaling factor. In such a case, Reserved may mean that a default value is used as the layer 2 buffer size.

In the modification 2, the reference scaling factor is associated with the index, and the first information element may include an information element that indicates the index associated with the reference scaling factor. For example, the first information element may include an information element that indicates the index associated with the reference scaling factor and an information element indicating the weighting value itself, or may include an information element that indicates the index associated with the reference scaling factor and an information element that indicates the index associated with the weighting value.

[Other embodiments]

The contents of the present invention have been described so far with reference to the embodiments. However, the present invention is not limited to these descriptions, and it is obvious to those skilled in the art that various modifications and improvements can be made.

Although not particularly mentioned in relation to the above-mentioned embodiment, the UE 200 may transmit to the base station 300 a third information element indicating that the first information element cannot be transmitted. The third information element may be included in the RRC message. When the base station 300 is notified of the third information element, the base station 300 may determine that the UE 200 has a default value set as the layer 2 buffer size.

In the embodiment described above, the first information element may include an information element for specifying the scaling factor multiplied by the parameter used for specifying the layer 2 buffer size, may include an information element for specifying the layer 2 buffer size, or may include an information element for specifying the band combination that can be supported by the layer 2 buffer size. The first information element may include two or more information elements selected from the above information elements.

In the above-described embodiment, the operation example 1 to operation example 4 have been described. Two or more operation examples selected from the operation example 1 to operation example 4 may be combined.

Moreover, the block configuration diagram used for explaining the embodiments (Figs. 2 and 3) illustrates blocks of functional unit. Those functional blocks (components) can be realized by a desired combination of at least one of hardware and software. Methods for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include determining, deciding, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

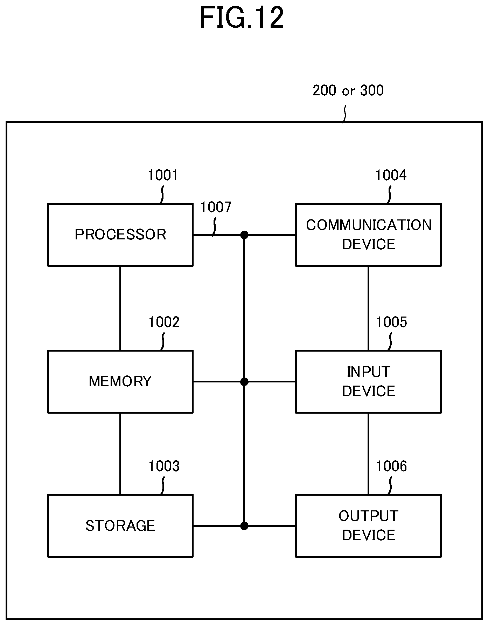

Furthermore, the eNB111, the gNB121, and the UE 200 (device) explained above can function as a computer that performs the processing of the radio communication method of the present disclosure. Fig. 12 is a diagram illustrating an example of a hardware configuration of the device. As illustrated in Fig. 12, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks of the device (see Fig. 3) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main storage device (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be obviously performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The judgement may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Regardless of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a radio technology (infrared light, microwave, or the like), then at least one of these wired and radio technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves in an unmanned manner (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each one or more frames in the time domain may be called sub-frame.

A sub-frame may be composed of one or more slots in the time domain. The sub-frame may have a fixed time length (e.g., 1 ms) that does not depend on numerology.

The numerology may be a communication parameter applied to at least one of transmission and reception of a signal or channel. The numerology may indicate, for example, at least one of subcarrier spacing (SCS), bandwidth, symbol length, cyclic prefix length, transmission time interval (TTI), number of symbols per TTI, radio frame configuration, a specific filtering process performed by a transceiver in the frequency domain, and a specific windowing process performed by the transceiver in the time domain.

The slot may be composed of one or more symbols (orthogonal frequency division multiplexing (OFDM) symbols, single carrier frequency division multiple access (SC-FDMA) symbols, etc.) in the time domain. The slot may be a time unit based on numerology.

The slot may include a plurality of mini-slots. Each mini-slot may be composed of one or more symbols in the time domain. The mini-slot may be called sub-slot. The mini-slot may be composed of a smaller number of symbols than slots. The PDSCH (or PUSCH) transmitted in a time unit larger than the mini-slot may be called PDSCH (or PUSCH) mapping type A. The PDSCH (or PUSCH) transmitted using the mini-slot may be called PDSCH (or PUSCH) mapping type B.

The radio frame, sub-frame, slot, mini-slot, and symbol all represent a time unit for transmitting a signal. The radio frame, sub-frame, slot, mini-slot, and symbol may have respectively different names corresponding to them.

For example, one sub-frame may be called transmission time interval (TTI), a plurality of consecutive sub-frames may be called TTI, and one slot or one mini-slot may be called TTI. That is, at least one of the sub-frame and the TTI may be a sub-frame (1 ms) in the existing LTE, or may be a period shorter than 1 ms (for example, 1 to 13 symbols), or may be a period longer than 1 ms. The unit representing TTI may be called slot, mini-slot, or the like instead of sub-frame.

TTI refers to, for example, the minimum time unit for scheduling in radio communication. For example, in the LTE system, the base station performs scheduling to allocate radio resources (frequency bandwidth that can be used in each user terminal, transmission power, etc.) to each user terminal at the TTI. The definition of TTI is not limited to this.

The TTI may be a transmission time unit of a channel-encoded data packet (transport block), code block, codeword, and the like, or may be a processing unit for scheduling, link adaptation, or the like. When a TTI is given, a time section (for example, the number of symbols) in which a transport block, code block, codeword, and the like are actually mapped may be shorter than the TTI.

When one slot or one mini-slot is called TTI, one or more TTIs (that is, one or more slots or one or more mini-slots) may be the minimum time unit for scheduling. Also, the number of slots (the number of mini-slots) constituting the minimum time unit for scheduling may be controlled.

A TTI having a time length of 1 ms may be called usual TTI (TTI in LTE Rel. 8-12), normal TTI, long TTI, usual sub-frame, normal sub-frame, long sub-frame, slot, or the like. A TTI shorter than the usual TTI may be called shortened TTI, short TTI, partial TTI (partial or fractional TTI), shortened sub-frame, short sub-frame, mini-slot, subslot, slot, or the like.

The long TTI (e.g., usual TTI, sub-frame, or the like) may be replaced with a TTI having a time length exceeding 1 ms, and the short TTI (e.g., shortened TTI or the like) may be replaced with a TTI having a length less than the length of the long TTI and equal to or greater than 1 ms.

The resource block (RB) is a resource allocation unit in the time domain and the frequency domain, and may include one or more contiguous sub-carriers in the frequency domain. The number of sub-carriers included in the RB may be the same regardless of numerology, and may be, for example, 12. The number of sub-carriers included in the RB may be determined based on numerology.

The time domain of the RB may include one or more symbols, and may have a length of one slot, one mini-slot, one sub-frame, or one TTI. One TTI, one sub-frame, or the like may be formed by one or more resource blocks.

One or more RBs may be called physical resource block (PRB), sub-carrier group (SCG), resource element group (REG), PRB pair, RB pair, or the like.

The resource block may be formed by one or more resource elements (RE). For example, one RE may be a radio resource domain of one sub-carrier and one symbol.

A bandwidth part (BWP) (which may be called partial bandwidth or the like) may represent a subset of contiguous common resource blocks (RBs) for certain numerology in a certain carrier. Here, the common RB may be specified by an RB index with reference to a common reference point of the carrier. A PRB may be defined in a BWP and numbered within the BWP.

The BWP may include a BWP for UL (UL BWP) and a BWP for DL (DL BWP). For the UE, one or more BWPs may be set within one carrier.

At least one of the set BWPs may be active and the UE may not be assumed to transmit or receive a predetermined signal/channel outside the active BWP. The "cell", "carrier", and the like in the present disclosure may be replaced with the "BWP".

The structures of the radio frame, sub-frame, slot, mini-slot, symbol, and the like described above are merely examples. For example, the number of sub-frames included in a radio frame, the number of slots per sub-frame or radio frame, the number of mini-slots included in a slot, the number of symbols and RBs included in a slot or mini-slot, the number of sub-carriers included in a RB, the number of symbols in a TTI, symbol length, cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like. The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the devices described above may be replaced with "unit", "circuit", "device", or the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles shall include plurality of nouns following these articles.

The terms "determining" and "deciding" used in the present disclosure may encompass a wide variety of operations. The terms "determining" and "deciding" here may mean, for example, determining and deciding that judging, calculating, computing, processing, deriving, investigating, looking up, search, inquiry (for example, searching a table, database, or other data structures), ascertaining, or the like, has been done. The terms "determining" and "deciding" here may also mean determining and deciding that receiving (for example, receiving information), transmitting (for example, transmitting information), input, output, or accessing (for example, accessing data in a memory) has been done. The terms "determining" and "deciding" here may further mean determining and deciding that resolving, selecting, choosing, establishing, or comparing has been done. That is, the terms "determining" and "deciding" here may mean determining and deciding that some operation has been done. The term "determining (deciding)" here may be replaced with "assuming", "expecting", "considering", or the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

| | |
|---|---|
| 100 | Radio communication system |
| 110 | E-UTRAN |
| 111 | eNB |
| 120 | NG RAN |
| 121 | gNB121 |
| 130 | Core network |
| 200 | UE |
| 210 | Receiving unit |
| 220 | Transmitting unit |
| 230 | Control unit |
| 300 | Base station |
| 310 | Receiving unit |
| 320 | Transmitting unit |
| 330 | Control unit |

| | |
|---|---|
| 400 | Upper node |
| 1001 | Processor |
| 1002 | Memory |
| 1003 | Storage |
| 1004 | Communication device |
| 1005 | Input device |
| 1006 | Output device |
| 1007 | Bus |

**Claims**

1. A terminal comprising:

   a predetermined buffer that is set as a buffer for use in the terminal; and
   a transmitting unit that transmits a first information element related to size of the predetermined buffer to a base station.

2. The terminal according to claim 1, wherein the transmitting unit transmits, as the first information element, at least one of an information element for specifying a coefficient multiplied by a parameter used for specifying the size of the predetermined buffer, an information element for specifying the size of the predetermined buffer, and an information element for specifying a combination of bands supportable by the size of the predetermined buffer.

3. The terminal according to claim 1 or 2, wherein the transmitting unit transmits, to the base station, a second information element indicating whether the terminal has a function of notifying the first information element.

4. The terminal according to any one of claims 1 to 3, wherein the transmitting unit transmits the first information element in response to a request from the base station.

5. The terminal according to any one of claims 1 to 3, wherein the transmitting unit transmits the first information element in response to detection of a predetermined trigger occur at the terminal.

# FIG.1

# FIG.2

# FIG.3

300

BASE STATION

310

RECEIVING
UNIT

320

TRANSMITTING
UNIT

330

CONTROL
UNIT

# FIG.4

(1)MR-DC or NR-DC

(a) $MaxULDataRate\_MN * RLCRTT\_MN + MaxULDataRate\_SN * RLCRTT\_SN + MaxDLDataRate\_SN * RLCRTT\_SN + MaxDLDataRate\_MN * (RLCRTT\_SN + X2/Xn\ delay + Queuing\ in\ SN)$

(b) $MaxULDataRate\_MN * RLCRTT\_MN + MaxULDataRate\_SN * RLCRTT\_SN + MaxDLDataRate\_MN * RLCRTT\_MN + MaxDLDataRate\_SN * (RLCRTT\_MN + X2/Xn\ delay + Queuing\ in\ MN)$

(2)OTHER

(c) $MaxDLDataRate * RLC\ RTT + MaxULDataRate * RLC\ RTT$

~FOR REFERENCE~

X2/Xn delay + Queuing in SN = 25ms if SCG is NR, and 55ms if SCG is EUTRA

X2/Xn delay + Queuing in MN = 25ms if MCG is NR, and 55ms if MCG is EUTRA

RLC RTT for EUTRA cell group = 75ms

RLC RTT for NR cell group is defined as follow.

| SCS (KHz) | RLC RTT (ms) |
|-----------|--------------|
| 15KHz | 50 |
| 30KHz | 40 |
| 60KHz | 30 |
| 120KHz | 20 |

# FIG.5

| Index | Scaling Factor |
|-------|----------------|
| 0 | 0.1 |
| 1 | 0.5 |
| 2 | 1.0 |
| 3 | 1.5 |
| ... | ... |

# FIG.6

| Index | Total layer 2 buffer size |
|-------|---------------------------|
| 0 | PPP byte |
| 1 | QQQ kbyte |
| 2 | RRR kbyte |
| 3 | SSS Mbyte |
| ... | ... |

# FIG.7

| Index | DEFAULT VALUE | SUPPORTABILITY |
|---|---|---|
| Band combo#1 | 1000MB | Not support |
| Band combo#2 | 500MB | Not support |
| Band combo#3 | 300MB | Not support |
| Band combo#4 | 200MB | Support |
| Band combo#5 | 50MB | Support |

# FIG.8

200

UE

300

BASE
STATION

S10

FIRST INFORMATION ELEMENT

# FIG.9

200

UE

300

BASE
STATION

S20

SECOND INFORMATION ELEMENT

S21

FIRST INFORMATION ELEMENT

# FIG.10

200

UE

300

BASE
STATION

S30

NOTIFICATION REQUEST

S31

FIRST INFORMATION ELEMENT

# FIG.11

200

UE

300

BASE
STATION

S40

DETECT
TRIGGER

S41

FIRST INFORMATION ELEMENT

# FIG.12

200 or 300

**INTERNATIONAL SEARCH REPORT**

International application No.

PCT/JP2020/010106

A.  CLASSIFICATION OF SUBJECT MATTER
Int. Cl. H04W8/22(2009.01)i
FI: H04W8/22

According to International Patent Classification (IPC) or to both national classification and IPC

B.  FIELDS SEARCHED

Minimum documentation searched (classification system followed by classification symbols)
Int. Cl. H04W4/00-99/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | WO 2019/065761 A1 (NTT DOCOMO INC.) 04 April 2019, | 1-2, 4-5 |
| Y | paragraphs [0021]-[0033], [0038]-[0040], [0054] | 3 |
| Y | US 2004/0009779 A1 (QU, Hai et al.) 15 January 2004, paragraph [0045] | 3 |

☐ Further documents are listed in the continuation of Box C.          ☒ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 08.10.2020 | 20.10.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

International application No.

PCT/JP2020/010106

| Patent Documents referred to in the Report | Publication Date | Patent Family | Publication Date |
|---|---|---|---|
| WO 2019/065761 A1 | 04.04.2019 | (Family: none) | |
| US 2004/0009779 A1 | 15.01.2004 | WO 2004/006594 A1 paragraph [1042] | |

Form PCT/ISA/210 (patent family annex) (January 2015)